# EUROPEAN PATENT APPLICATION

(11) **EP 1 571 861 A2**
(43) Date of publication of application: **07.09.2005**
(21) Application number: 05101520.4
(22) Date of filing: 28.02.2005
(51) Int. Cl.: H04Q 7/36

(54) **Transmission of data about the use of spectrum according to the geographical position**

(30) Priority: 02.03.2004 GB 0404625
(71) Applicant: Agilent Technologies, Palo Alto, CA 94303-0870 (US)
(72) Inventor: Mitchell, Kevin, South Queensferry Lothian EH30 9TG (GB)
(74) Representative: Coker, David Graeme

(57) **Abstract**

Information for coordinating use of wireless spectrum resources is disseminated from a frequency server in accordance with the geographic location of wireless devices intending to use the spectrum. The information may be disseminated via a beacon station that communicates with the frequency server to obtain spectrum usage information for the location of the beacon and broadcasts it to wireless devices in the vicinity of the beacon.

## Description

This invention relates to methods and systems for disseminating control information to a wireless communications device, for example to coordinate use of limited wireless spectrum resources by a plurality of such devices.

### Background Art

The early years of the twenty-first century have seen development and deployment on an increasing scale of wireless technologies for enabling high-speed data transfer over short ranges to mobile communications devices such as laptop computers, personal digital assistants and mobile telephones. Various standards have been established for these technologies, including that known as Bluetooth and the IEEE 802.11 family of standards, also referred to as WiFi. Stations (known as hotspots) operating according to these standards have been installed at a large number sites in many countries, to provide wireless access for users in the vicinity of these stations to resources such as the Internet. To facilitate use of the system by a large number of users 802.11 employs frequency diversity, with each base station operating (in principle) on any of 14 different predefined frequency channels.

As WiFi grows in popularity and public hotspots become more widely deployed, there will be increasing pressure to allocate additional bands and channels for 802.11-style networking. Even the eventual introduction of third-generation (3G) mobile phones is unlikely to quell this demand. The data rates obtainable with such phones are still relatively low, so hybrid solutions will very likely be deployed. These will use a high-speed 802.11 connection when in range of a hotspot, and the 3G network, at lower speed, elsewhere. The resulting contention for user access within popular hotspots can in the short-term be alleviated by adding additional access points and making the cell sizes smaller (reduced base station transmit power). However, there is a limit to the extent to which these solutions can be applied before some of the commercial advantages of WiFi are undermined. A longer term strategy for easing contention would appear in principle to be the allocation of more channels to such services, with each access point supporting multiple channels.

One of the limiting factors in allocating more bands to WiFi services is the differing uses of the existing defined channels across the world. In the case of 802.11b for example, there are currently 14 channels defined, between 2.412 and 2.483 GHz. In North America channels 1 to 11 may legally be used. In Europe channels 12 and 13 are also available, except in Spain where a user may only access channels 10 and 11, and in France where use of channels 10, 11, 12 and 13 is permitted. Finally in Japan only channel 14 is available. Such constraints are particularly onerous when many users of WiFi are mobile across national boundaries. A user roaming between countries needs to be aware of the local constraints. When a device is used in infrastructure mode then the problem is less severe as the access points are typically not mobile, and will be configured to respect the local constraints. When devices use ad-hoc mode to communicate then the problem becomes more acute.

Most countries have gaps or holes in their wireless spectrum usage, that is frequency bands that are either unused or where the incumbent users could be easily moved. However, in many cases a gap in one country is in use for other purposes elsewhere. Coordinating the release and reclassification of bands internationally is therefore a time-consuming process. Allocating additional bands on a per-country basis is obviously easier, but increases manufacturing costs and confusion. A recent proposal by the Federal Communications Commission (FCC) ("A proposal for a rapid transition to market allocation of spectrum" by E. Kwerel & J. Williams, OPP Working Paper 38, November 2002) will potentially make the situation much more complicated in the short-term. WiFi may be allowed to spread into many bands in the US that will conflict with other uses in the rest of the world. Roaming users may then cause severe problems when they attempt to use outside the US wireless mobile devices intended for the US market.

Even within a country there are many potentially unnecessary restrictions. For example, within an office block it might be feasible to use the marine or ham radio bands at low power for 802.11-style communication, without causing interference to legitimate users. However, because there is currently no reliable mechanism for preventing use of such bands when a device is removed from the building, the regulatory authorities naturally err on the side of caution and do not permit any such use at all.

In the past individual WiFi devices have been constrained to a small choice of bands, typically one. Even dual band cards, capable of operating on both 802.11a and 802.11b frequencies, are relatively rare at present. So the possibility of being allowed to use hundreds of channels in many different frequency bands has been largely academic. But current work in software defined radios, and devices such as multi-standard transceivers being developed by SiRiFIC Wireless Corporation, may make it far more feasible to deploy such devices.

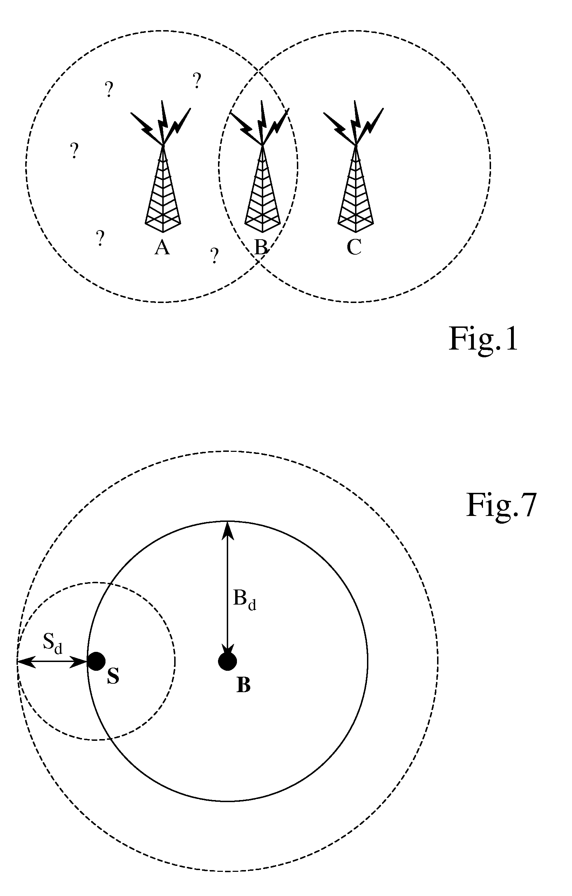

One approach to exploiting spectrum holes is to use adaptive techniques (e.g. "The exploitation of "spectrum holes" to enhance spectrum efficiency" submitted to the FCC by Motorola in October 2002). A device wishing to make 802.11 transmissions listens for signals in a particular frequency band; if no traffic is heard over some period of time, or the device detects the band is already being used for 802.11 communication, then it takes this as implicit permission to use this band itself. Such techniques have the advantage of being very distributed, but they also have some obvious disadvantages. For example, consider the situation illustrated in Figure 1, where device A is trying to detect potential spectrum holes. It is outside the range of device C and so will be unaware that this device is transmitting data to device B on a particular frequency band. If A (erroneously) concludes that this frequency is unused and starts transmitting on it, then communications between device B and device A may be disrupted. This is the well-known hidden device or hidden node problem.

Peer to peer networking techniques can go some way towards alleviating such problems. If adjacent devices exchange their knowledge of potential spectrum holes then a device may be able to build a better picture of the geographic extent of such a hole. If the extent is substantially larger than the transmission range of the devices wishing to use the hole then this would give more confidence that there are no hidden device problems associated with its use. Of course it still gives no guarantee, and bands that are used intermittently may still be misdiagnosed as holes. Furthermore, when an official user does start transmitting on the band there is no easy way to distinguish this use from other, unlicensed users with no more right or priority to use the band than the WiFi devices. Under what circumstances should these devices therefore stop using such a band when other transmissions are detected?

Adaptive techniques make it difficult to provide any guarantee over when and where a device will use a particular channel, and at what power level. This makes it unlikely that regulatory authorities would be comfortable with large-scale liberalisation of the spectrum if they had to rely on such technology.

### Disclosure of Invention

According to one aspect of this invention there is provided a method of disseminating control information to a wireless communications device to coordinate use ofa wireless spectrum resource in accordance with geographic location of the device, comprising:
establishing a database specifying values of a parameter for use of a wireless spectrum resource in accordance with geographic location of a device intending to use the spectrum; and
providing to a wireless communications device information selected from the database in accordance with the current geographic location of the device, said information indicating the respective value of the parameter for use of the wireless spectrum resource by the device at that location.

The invention makes possible an automatic mechanism for choosing channels based on geographic location. By enabling automatic constraint of channel usage to within relatively fine-grained geographic areas, use is facilitated of otherwise problematic techniques such as WiFi transmission within buildings in bands normally reserved for other services. In particular, the invention can be used to ensure that devices only use an appropriate set of frequencies, power levels and modulation standards appropriate to their current location.

In one implementation of the invention a wireless communications device receives the information selected from the database passively from a communications station that broadcasts the information to devices in its vicinity, the information being selected from the database in accordance with the geographic location of the communications station.

According to another aspect of the invention there is provided a frequency server for disseminating control information to coordinate use of a wireless spectrum resource in accordance with geographic location of wireless communications devices, comprising:
a database specifying values of a parameter for use of a wireless spectrum resource in accordance with geographic location of a device intending to use the spectrum; and
a communications link for receiving an indication of geographic location of a device and for providing information selected from the database in accordance with that indication of geographic location, said information indicating the respective value of the parameter for use of the wireless spectrum resource at that location.

According to a further aspect of the invention there is provided communications station for disseminating control information to a wireless communications device to coordinate use of a wireless spectrum resource in accordance with geographic location of the device, comprising:
a communications link for receiving information selected from a database in accordance with geographic location of the communications station, said information indicating the value of a parameter for use of the wireless spectrum resource at that location; and
wireless broadcast apparatus for broadcasting the information to wireless communications devices in the vicinity of the communications station.

According to another aspect of the invention there is provided a method of controlling operation of a wireless communications device to coordinate use of a wireless spectrum resource in accordance with geographic location of the device, comprising:
receiving in a wireless communications device information selected from a database in accordance with the current geographic location of the device, said information indicating a value of a parameter for use of the wireless spectrum resource by the device at that location; and
controlling operation of the wireless communications device in accordance with the received information.

According to a further aspect of the invention there is provided a device for providing authenticated location information, comprising:
a data store to store location information defming the geographic location of the device;
an authentication module for providing secure authentication of the source of the location information; and
a movement detector for detecting movement of the device and disabling retrieval of the location information from the data store in the event that such movement is detected.

### Brief Description of Drawings

A method and apparatus in accordance with this invention, for disseminating control information to a wireless communications device, will now be described, by way of example, with reference to the accompanying drawings, in which:
- Figure 1: illustrates the so-called hidden node problem;
- Figure 2: is a block schematic diagram of a frequency server;
- Figure 3: is a flowchart illustrating the principal operating procedures of a frequency server;
- Figure 4: shows a frequency server and a beacon station operating to disseminate control information to wireless communications devices in accordance with the invention;
- Figure 5: is a block schematic diagram of a frequency beacon station;
- Figure 6: is a flowchart illustrating the principal operating procedures of a frequency beacon;
- Figure 7: is a schematic diagram illustrating considerations for determining beacon cell size for fixed power operation;
- Figure 8: is a schematic diagram illustrating considerations for determining beacon cell size for variable power operation; and
- Figures 9 and 10: are schematic diagrams illustrating different situations that may exist when a mobile device is establishing contact with a WiFi access point.

### Detailed Description

The invention provides a framework, in one embodiment, for automatically controlling the frequencies, power levels and modulation schemes used by wireless communications devices such as 802.11 access points, laptop computers and personal digitial assistants. Some aspects of its operation are comparable to the Internet's Domain Name Service (DNS), described in Request for Comments (RFC) 1034 and RFC 1035 of the Internet Engineering Task Force (IETF), and to the Dynamic Host Configuration Protocol (DHCP) described in RFC 2131, but the invention provides services not contemplated by either of those systems and to that end further includes additional functionality.

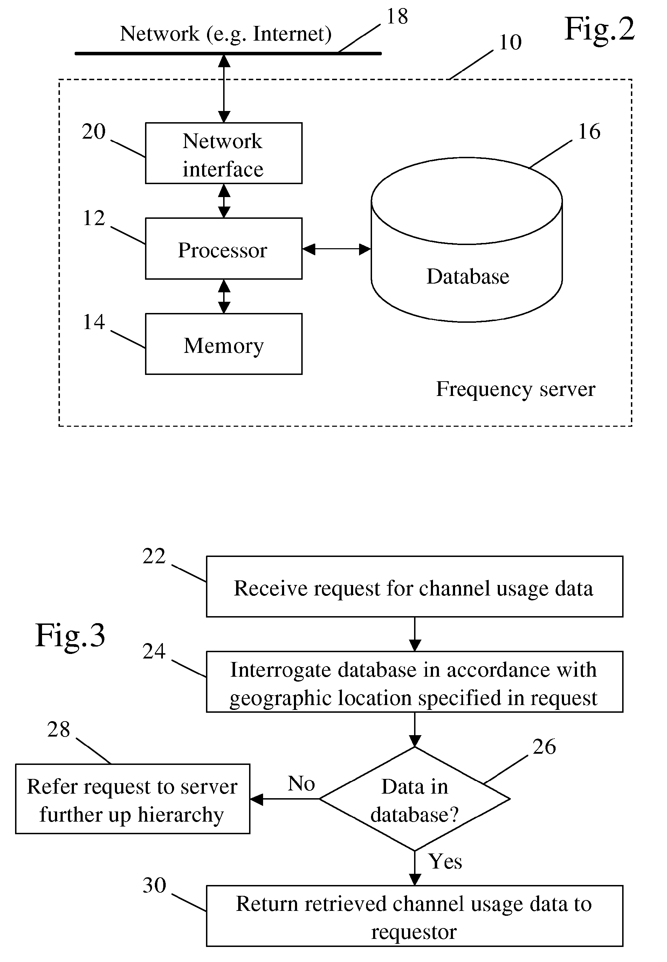

Implementation of the invention involves the establishment by regulatory or similar authorities of "frequency servers", analogous to root domain name servers, providing the following service: given the coordinates of any geographic location within the region for which it holds information, the server determines and supplies details on the frequency bands, power levels, and/or modulation schemes a particular service such as WiFi is permitted to use at the specified location. Figure 2 shows the principal components of a frequency server 10:
its operation is coordinated by a processor 12 operating in accordance with software program instructions stored in a memory 14, to use a database 16 for storage and retrieval of channel usage data. The processor 16 communicates over a network 18, such as the Internet, via a network interface 20, to receive channel usage data from an authenticated source for storage in the database 16. It also receives and responds to queries via the network 18 for channel usage data in accordance with geographic location, using the procedure shown in Figure 3 and
described further below.

Initially the frequency server 10 may treat the whole region it serves in a uniform way, supplying details of the existing 802.11b channel(s) already authorised for use by the WiFi service for example. But over time the data in the database 16 can be extended with more options for specific areas, down to any desired level of granularity such as individual office blocks. It is envisaged that these extensions would be added on the basis of user demand. Corporate and other large users would be able apply to have their sites surveyed, for a fee, to identify additional channels that may safely be used at their premises. In return they would be able to use a wider range of channels, and hence bandwidth, within the geographic constraints of their site. A hierarchy of frequency servers can be constructed, with root servers containing default settings for the whole region, and local servers providing more specialised extensions and constraints based on local knowledge.

A request for details of channel usage data for a geographic location may be sent to the frequency server 10 via the Internet, for example in a TCP or UDP message specifying that location. Referring to Figure 3, when the frequency server 10 receives such a request, as shown at 22, the server interrogates the database 16 at step 24 using the specified location as a search key. At step 26 the server determines whether or not the database 16 contains the requested data. If not, for example because the location is outside that server's coverage area, the server refers the request to another frequency server higher up the hierarchy, at step 28. Otherwise, at step 30 the server returns the requested information to the requestor, again via its Internet connection.

A wireless device wishing to operate within the region needs to be able to determine which channels can be used prior to establishing contact with other wireless devices in its proximity. Wireless devices typically obtain a temporary Internet Protocol (IP) address from a DHCP server when they attempt their first communication. Therefore one possibility in principle would be to use an extension to DHCP to distribute channel usage information. If a DHCP server knows its location it can obtain channel usage information pertinent to that location from the frequency server. An extension to DHCP could define an option that provides this information to a wireless device when the device is provided with an IP address by a DHCP server. Unfortunately there is currently no guaranteed precise correlation between an IP subnet and its geographic location. To overcome this problem one implementation of the invention additionally involves the use of stations for disseminating channel usage information, referred to herein as frequency "beacons".

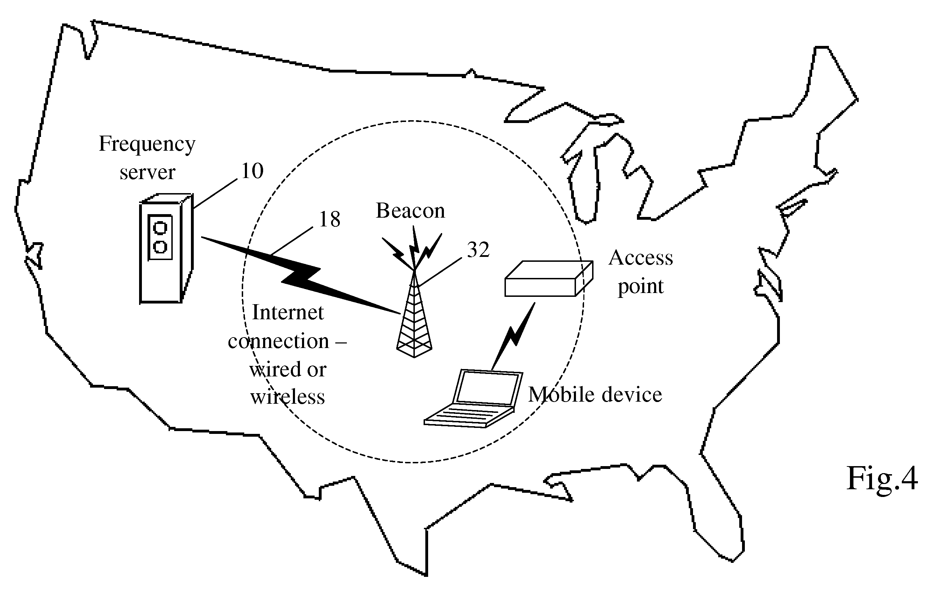

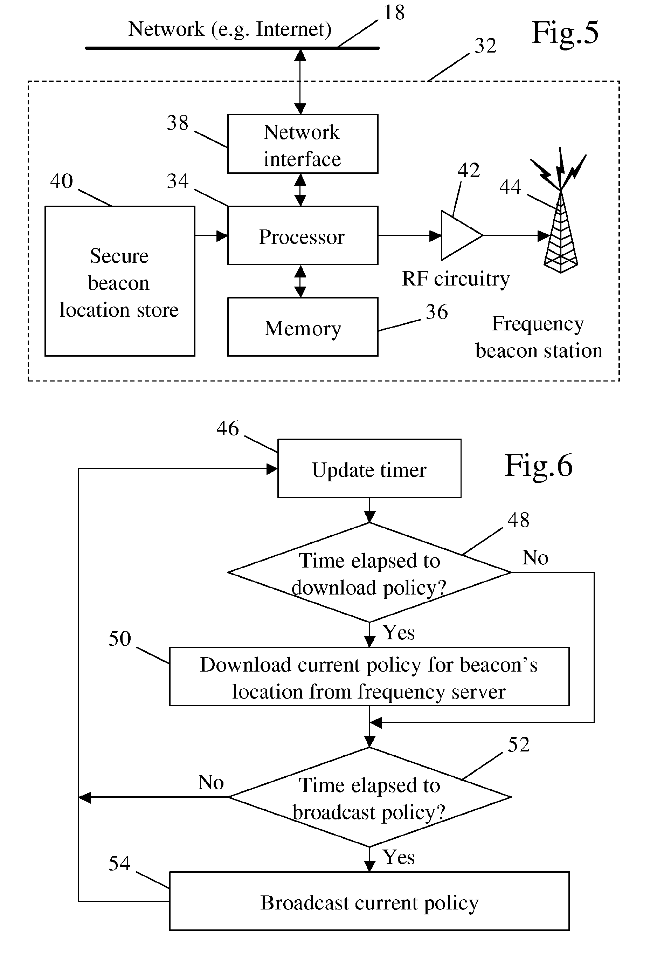

A beacon, in the context of this description, is a transmitter that has a known, reliable geographic location and that can communicate with a frequency server 10, for example via the Internet, as illustrated schematically (and not to scale) in Figure 4. Figure 5 shows the major components of a beacon 32. Referring to Figure 5, the beacon's operation is coordinated by a processor 34 operating in accordance with software program instructions stored in a memory 36, to communicate over the network 18, via a network interface 38, with the frequency server 10. The beacon 32 sends the server 10 periodic requests for channel usage data for the beacon's location as specified in a secure store 40 within the beacon. The usage data received in response is held in the memory 36 and periodically broadcast via an RF amplifier 42 and antenna 44.

A beacon may have a Global Positioning System (GPS) receiver built into the secure store 40, to determine its position. However, beacons may be sited where GPS signals are not available, such as inside buildings. An alternative approach in such situations is to hardwire the position information into the beacon, in the secure store 40. In both cases cryptographic signing is used to ensure that any unauthorised attempt to alter the position information can be detected. For example, in the case of a hardwired position an inspector can certify that the position recorded in the secure store 40 is accurate, and download a digital certificate into the store to authenticate this fact; the store includes a tamperproof mechanism that invalidates the digital certificate if the beacon is moved.

Figure 6 outlines the procedure implemented by each beacon 32. Referring to Figure 6, the beacon updates a timer (possibly implemented in software) at step 46 and at step 48 checks whether the time has elapsed to interrogate the associated frequency server 10, at step 50, to determine the current frequency band policy for the beacon's vicinity. Such information is provided with a limited period of validity, just as with DHCP leases, ensuring that beacons cannot cache this information indefmitely. The beacon and the frequency server authenticate each other using known authentication protocols to ensure that the information returned by the server is genuine. At step 52 the beacon further checks whether the time has elapsed for a periodic transmission of this information to all wireless devices under its control, at step 54. Thereafter the procedure returns to step 46. All access points and mobile devices within range of the beacon 32 are permitted to use any of the channels identified by the beacon.

There is a trade-off to be made between number of beacons and the size of the "cell" within which a beacon provides service to wireless devices. If a beacon transmits channel usage information at high power, i.e. its cell size covers a wide area, then there is a high risk of devices within this cell conflicting with other authorised users. The number of channels that can be used in this area therefore has to be restricted to the "standard" set, e.g. the basic set of channels authorised for use throughout the relevant regulatory area. A small cell size covers a smaller geographic area, and so could permit a wider choice of channels without causing interference to others. But in this case more beacons would need to be deployed. The information stored in the frequency server 10 is therefore selected to take account of a beacon's cell size, as well as its location, when determining an appropriate set of channels and other policy data for the beacon to broadcast. In practice the area served by a beacon will be a complicated, irregular shape, governed by many factors. To make sure of erring on the side of safety the range of a beacon, for a given power level, is desirably overestimated, and the coverage area is assumed to be circular, with a radius determined by this range.

If a beacon can transmit at varying power levels then logically it can be viewed as a set of beacons, each with its own power level and resulting cell size. The beacon may interrogate the server once for each cell size, and then broadcast the respective channel use policy for each power level. A device close to the beacon will receive multiple broadcasts, with differing policies. However, there will be a natural ordering between these, and the device can be arranged base its channel use decision on the most liberal policy received.

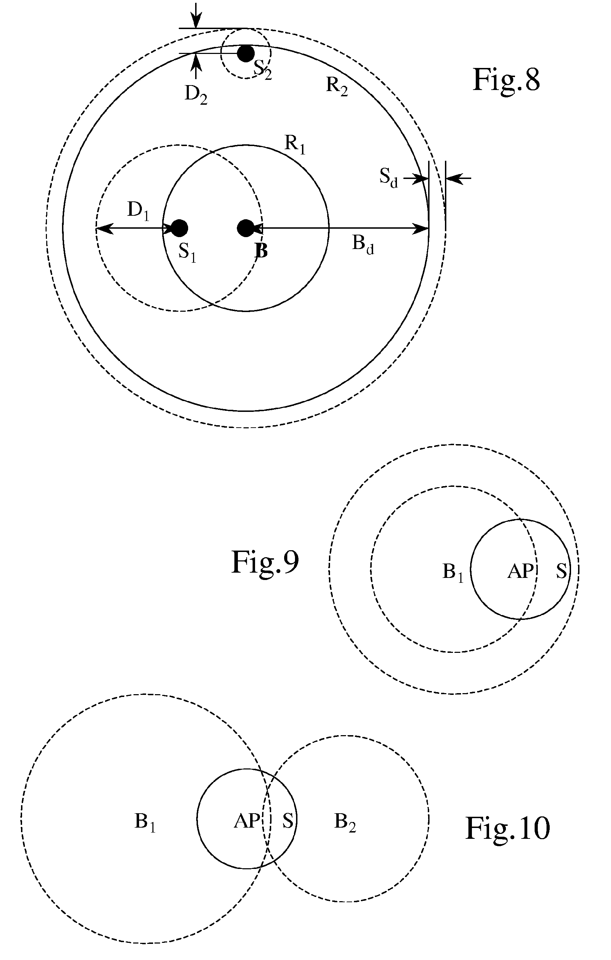

Beacon cell size requires more precise definition. The "contract" between beacon and frequency server has the following form: any device within the boundary of the beacon's cell, e.g. within a specified distance from the beacon, may be permitted by the beacon to use the specified wireless resources, as long as any signal escaping outside the boundary is guaranteed to be below a specified signal strength threshold. The relationship between this boundary, the maximum range of the beacon's signal and the maximum range of a wireless device's signal is shown in Figure 7. The beacon B is considered always to transmit at maximum power, and the maximum distance at which this signal can be received is B_{d}. A device S at this distance from the beacon B is using one of the channels permitted by the beacon, also at maximum power. The maximum distance at which this signal is above the signal strength threshold is S_{d}. Therefore the maximum distance at which a device controlled by the beacon could potentially disrupt other users is B_{d}+S_{d}. This distance is therefore the cell size that must be reported to the frequency server when the beacon B is requesting the current frequency band policy for the beacon's vicinity.

The larger the cell size B_{d} is, the smaller is the number of channels that the beacon can make available. But if the permitted power for each channel is reduced, thus reducing the range S_{d} of signals from wireless devices, then all users within the cell will suffer a reduced level of service. This might prevent an access point from communicating on a particular channel with a mobile device because it would be out of range, even though both of them are well inside the cell boundary.

One possible approach to minimising this problem is to broadcast a number of channel advertisements, at different strengths, as illustrated in Figure 8. The beacon B first advertises the availability of a specific channel at low power, reach those devices within region R₁. This advertisement allows the channel to be used at power P₁, with a respective maximal range D₁. The same channel is then advertised at maximum power (with a range R₂), but with permission to use the channel at a power setting P₂<P₁ and associated shorter range D₂. A device receiving multiple transmissions from the beacon B is allowed to use the highest power setting that is specified in the broadcasts it receives. This technique reduces the size of the excess S_{d} of the reported cell size over the beacon range R₂, whilst allowing devices closer to the beacon B to still operate at full power.

Client devices such as 802.11 access points and devices are arranged to use the transmissions from the nearest or strongest received signal-strength beacon to determine which band(s) and channel(s) are currently available for use. When out of range of an authenticated beacon the devices are arranged to use a default set of channels, e.g. the currently specified set of 802.11b channels.

The information transmitted by a beacon may be digitally signed to authenticate it, to avoid the possibility of a bogus beacon being introduced into the system. Ideally the communication mechanism and protocol between client device and beacon is such that a relay device cannot be used to extend the service range of the beacon without being detected. One strategy is to have a challenge/response exchange that has to be completed within a limited time window that would be exceeded by signal propagation delays if the service range were being artificially extended. This approach does not completely prevent a relay being constructed, but likely could prevent this being accomplished without specialised hardware that is expensive and/or difficult to procure.

A beacon's digital certificate gives a guarantee of the beacon's location. If the client device can be known with reasonable certainty to be within a specified distance from the beacon then the location service can have other uses such as increased access control on connections to a corporate network.

The existing process used in 802.11 protocols for establishing communication between an access point and a user mobile device needs changing to make use of the frequency server and beacon facilities. Access points can still broadcast beacon frames on the standard 802.11 channels, and this mechanism can be used to establish initial contact between an access point and a mobile device. At this point both devices will have received from the frequency beacon advertisement(s) a set of channels and power levels they are permitted to use. This information may not be identical for both devices for a variety of reasons. If the devices S and AP are at different distances from a beacon B₁, as illustrated in Figure 9, then the device further away may have not received some of the advertisements. The two devices may even be serviced by different beacons B₁ and B₂, for example where cells overlap (Figure 10). So a negotiation phase (similar to that proposed for adjacent access points for example) needs to take place to determine an appropriate channel and associated power level that conform to the permissions received by each device. However, it is not sufficient just to pick a channel they have in common. A device S near the edge of the cell may only be able to use a channel at low power (as described above with reference to Figure 7), whereas the access point AP may be allowed to use the channel at a higher power level if it is nearer the beacon. This might result in the access point AP being able to contact the device S on this channel, but the reverse direction might fail owing to the lower transmission power allowed for the device S. Different channels may have different power constraints, depending on what else uses the band, and so in such a case another channel would be chosen, for one or both directions.

The situation where WiFi devices are used outside the range of a beacon also needs to be addressed. The standard channels can be considered for use in such cases, but as discussed above these channels depend on the country or region in which the device is being used. Another approach is to use a hierarchy of beacons. One beacon covers the whole region (e.g. a country), broadcasting the standard channels for that region. More localised beacons then broadcast the more location-specific constraints for those areas where there are enough expected users to justify the associated complexity and cost. The data rates required for the beacon transmissions are fairly minimal, and the access points and mobile devices only need to be able to receive (not transmit) on these bands. It is therefore envisaged to be relatively straightforward to identify a small set of bands to use for such transmissions that can cover the entire world.

Wireless devices sometimes incorporate mechanisms to vary their transmitter power depending on the estimated range to the receiver, or the observed error rate. Such mechanisms are applied for increased spectrum usage efficiency and longer battery life. These mechanisms would be unaffected by implementation of the invention other than incorporation of the requirement to observe the power limits advertised by the beacons. In some situations the wireless device's power control mechanism may suggest using a power level that is prohibited by the channel usage policy for the device's current geographic location. In such a case the device's control functionality should change operation to a different channel for which the power usage policy is consistent with the power control requirement.

Economising on battery power consumption is a crucial aspect in the design ofmany wireless devices. A system that requires the receiver to be always on, or the transmission of large numbers of additional data packets, will be at a severe disadvantage in such cases. The invention does not conflict seriously with typical power economy strategies. No device other than the frequency servers has to transmit back to the beacons. Connection establishment between an access point and a mobile device may require more exchanges to negotiate a channel for the mobile device to use. Roaming will be slightly more complex as well, as it may be necessary to renegotiate usage of a channel, even to the same access point, when a mobile device moves out of range of a low-power channel. Implementation of the invention doesn't stop a mobile device entering a low-power "sleep" mode. The only requirement is that when the device wakes up again it must wait for a signal from the beacon confirming a continued right to access the channel being used when sleep mode was entered before transmitting on the channel again.

The issue of automating cell-site planning is not a part of this invention. Beacons do not respond or react to the presence of any mobile wireless device in their service area. They merely passively broadcast information about the right to use particular channels within that area. The onus is on any device wishing to use a "non-standard" channel (i.e. not defined in the industry or regulatory standards) to be responsive to beacon signals as well as access points. Automation of channel selection is not a part of this invention either. The invention may make channel selection harder, as it provides more choice, and this choice may vary over time. But it may be envisaged that a stage will in future be reached where an access point has many channels to choose from, and is able to use multiple channels simultaneously. In such circumstances it will become unacceptable to rely on a user correctly configuring complicated choices manually, particularly if different access points are under the control of different authorities. So it is likely that peer-to-peer protocols between access points will need to be deployed to negotiate access point channel usage policies that minimise interference. A protocol such as the Inter Access Point Protocol (IAPP) could be extended for this purpose. The present invention could then co-exist with such capabilities.

Mobility is always an issue in wireless networks. When a mobile device moves outside a beacon's cell the device should cease using channels identified by that beacon. If the interval between beacon broadcasts is too long relative to the speed of the mobile device, the device may not cease using affected channels quickly enough. To control this risk the boundary between cells includes a "guard band", providing a no man's land between beacons with potentially conflicting channel use. If beacons transmit channel usage information at a rate of the order of once a second, then a user on foot will not travel far between transmissions and the guard band can be quite small. As with initial session establishment, a handover between access points is more complex than in existing systems, in order to negotiate an appropriate channel for the mobile device to use with the new access point. But this complexity will be encountered anyway when access points using multiple channels are implemented, so the additional overhead is minor. However, it is not clear that the invention as described above would work reliably for a "high-velocity" mobile device such as a car.

The possibility may be contemplated of simply advertising wide ranges of spectrum for use. However this raises a number of complex usage issues so it is safer to arrange the beacons to advertise specific channels rather than large bands. Signal bandwidth and adjacent channel power (ACP) considerations can be taken into account when additional channels are nominated for use.

The invention does require more infrastructure than an autonomous system that just listens for unused frequency bands. However, it offsets this by providing a number of advantages. Depending on the range of beacons, and the sophistication of the frequency servers, the invention allows a very fine-grained control over frequency usage as a function both of geography and time. For example, frequencies allocated for fire brigade use within a building could be made available to other users in normal circumstances, but this availability would be disabled when a fire alarm is activated.

Careful packaging to prevent easy disassembly of the components plus digital signing can give reasonable guarantees that restricted areas would be protected against inappropriate use of channels within those areas. The aim of such protection would be to require as much effort to work around the mechanism as to build an illegal radio. The beacon/server infrastructure could also be exploited for other uses, spreading the costs over a wider range of uses. The ability to determine an approximate position for a device, together with cryptographically-based confidence that this information is reliable, could be very useful in many areas. Although the description above has focused on supporting WiFi, the same infrastructure could be used for other services. For instance the UK has a dedicated band allocation of 183.5MHz to 184.5MHz for remote meter reading applications. Other countries may allocate other bands for such devices, requiring different models for each country. It could eventually become cheaper to make a remote meter reading device "universal", using frequency server transmissions to determine the band to use for such a device in a specific location, rather than making country-specific versions that involve the risk of use in countries for which they were not intended.

It is also possible to envisage beacons being able to download new firmware to a mobile wireless device, e.g. if a particular country uses a modulation scheme not initially installed in that device, assuming the use of a software-defined radio such as that being developed by SiRiFIC Wireless Corporation.

Commissioning a beacon need not be a time-consuming process. For example, standard wireless channel profiles can be predefined for common situations, such as an internet café in a high street setting. In many cases this avoids the need for an expensive site survey and may be sufficient if all that is required is access to a small set of additional channels at low power.

## Claims

1. A method of disseminating control information to a wireless communications device to coordinate use of a wireless spectrum resource in accordance with geographic location of the device, comprising:
establishing a database specifying values of a parameter for use of a wireless spectrum resource in accordance with geographic location of a device intending to use the spectrum; and
providing to a wireless communications device information selected from the database in accordance with the current geographic location of the device, said information indicating the respective value of the parameter for use of the wireless spectrum resource by the device at that location.

2. The method of claim 1, wherein the geographic location of the wireless communications device is indirectly specified by the identity of a communications path over which the information is provided.

3. The method of claim 2, wherein a wireless communications device receives the information passively from a communications station that broadcasts the information to devices in its vicinity, the information being selected from the database in accordance with the geographic location of the communications station.

4. The method of any one of the preceding claims, wherein the parameter comprises at least one of frequency, transmitted power level and modulation scheme.

5. A frequency server for disseminating control information to coordinate use of a wireless spectrum resource in accordance with geographic location of wireless communications devices, comprising:
a database specifying values of a parameter for use of a wireless spectrum resource in accordance with geographic location of a device intending to use the spectrum; and
a communications link for receiving an indication of geographic location of a device and for providing information selected from the database in accordance with that indication of geographic location, said information indicating the respective value of the parameter for use of the wireless spectrum resource at that location.

6. A communications station for disseminating control information to a wireless communications device to coordinate use of a wireless spectrum resource in accordance with geographic location of the device, comprising:
a communications link for receiving information selected from a database in accordance with geographic location of the communications station, said information indicating the value of a parameter for use of the wireless spectrum resource at that location; and
wireless broadcast apparatus for broadcasting the information to wireless communications devices in the vicinity of the communications station.

7. A method of controlling operation of a wireless communications device to coordinate use of a wireless spectrum resource in accordance with geographic location of the device, comprising:
receiving in a wireless communications device information selected from a database in accordance with the current geographic location of the device, said information indicating a value of a parameter for use of the wireless spectrum resource by the device at that location; and
controlling operation of the wireless communications device in accordance with the received information.

8. A device for providing authenticated location information, comprising:
a data store to store location information defining the geographic location of the device;
an authentication module for providing secure authentication of the source of the location information; and
a movement detector for detecting movement of the device and disabling retrieval of the location information from the data store in the event that such movement is detected.
